# EUROPEAN PATENT SPECIFICATION

(11) **EP 2 499 364 B1**
(45) Date of publication and mention of the grant of the patent: **01.01.2014**
(21) Application number: 10778970.3
(22) Date of filing: 04.11.2010
(51) Int. Cl.: B63B 21/50, F03D 11/04

(54) **FLOATING OFF-SHORE WIND TURBINE**
SCHWIMMENDE OFFSHORE-WINDENERGIEANLAGE
ÉOLIENNE OFF-SHORE FLOTTANTE

(30) Priority: 13.11.2009 DK 200901213
(43) Date of publication of application: 19.09.2012
(73) Proprietor: Vestas Wind Systems A/S, 8200 Aarhus N (DK)
(72) Inventor: KRISTENSEN, Jonas, DK-6900 Skjern (DK)
(86) International application number: PCT/EP2010/066806
(87) International publication number: WO 2011/057940

(56) References cited:
- GB-A- 2 378 679
- US-A1- 2009 249 707

## Description

### Technical field

The present invention generally relates to a floating off-shore wind turbine.

### Background of the invention

Off-shore wind turbines often comprise a pile, such as a mono-pile, which is anchored to the seabed, e.g. by being driven down into the seabed or by being held in place by a structure standing on the seabed. This mono-pile, possibly together with other structures affiliated with it, forms a foundation for a wind turbine tower to be erected thereon.

This method is involved with a complicated work since the seabed varies in topography and structural stability. Further, there is also a great risk of small angular difference in the axial direction between the tower sections and the mono-pile. There are also restrictions of how far off from the coast line such off-shore wind turbines can be erected due to the total tower/mono-pile length required to reach sea bed.

Another type of off-shore wind turbine is known as a floating wind turbine. In short this means that a conventional wind turbine is mounted on a floatation element, also known as a spar buoy, the latter being provided with ballast at the bottom in order to ensure the balance.

The general problem with these solutions is the overall weight of the turbine since a considerable amount of material is needed to not only secure the turbine but also for the latter to withstand wave forces.

An example of a prior art off-shore wind turbine can be found in GB 2378679A.

### Summary of the invention

In view of the above, an object is to provide a floating off-shore wind turbine allowing a reduced material consumption in order to reduce weight and cost.

Another object is to provide an off-shore wind turbine which may be erected no matter distance to the coast line.

According to one aspect, the invention refers to a floating off-shore wind turbine comprising a tower, a floatation element arranged at a lower end of said tower, at least one floating body connected to the tower and extending radially outward there from, said at least one floating body having a density lower than water so that it is configured to be submerged below sea level, and a plurality of connecting elements extending from the at least one floating body to an upper end of the tower and from the at least one floating body to the lower end of the tower, respectively. The tower (2) has a locally reduced cross section (A) at sea level.

By the at least one floating body being connected to and extending radially outward from the tower, each of the connecting elements may be spaced from the tower. This spacing facilitates supporting the tower against horizontal forces to which it is subjected, and vertically aligning the tower, holding the tower in a vertical position. The at least one floating body contributes thus not only to force distribution, but also to the floatation forces in order to thereby balance the wind turbine in the water. By the at least one floating body being submerged to a depth where it stays clear of the higher wave forces, the horizontal forces due to water impact are reduced. As is known, the wave forces are very high at surface level and decrease with diminishing depth. Depending on factors such as the overall strength of the tower and the prevailing sea depth, the depth to which the floating body should be submerged should be adapted to the specific conditions prevailing.

By the plurality of connecting elements extending from the at least one floating body to the upper and lower ends respectively of the tower, the tower may be vertically aligned and supported.

Further, the connecting elements contribute to support the tower in horizontal directions, i.e. preventing the wind turbine tower from tipping. This reduces the requirements for the connections between individual tower sections in case the tower is divided into sections. Typical horizontal loads are wind loads.

By said connecting elements, the bending moment induced by wind forces on the tower are transmitted to the connecting means on the wind side, from there to the at least one floating body, and from there further to the floatation element bottom. Thus, bending moment is relived from the wave impact area of the wind turbine, allowing this section of the tower and/or the floatation element to have a smaller diameter, hereby again taking up less wave forces and reducing the overall wave impact forces on the entire construction. As a consequence, material can be saved at the section of the turbine near water surface. Further, because of the smaller diameter per se and because the smaller diameter provides decreased wave forces, the mass of the entire turbine can be significantly reduced.

Further, due to the floating design there are no restrictions to how far off from land the wind turbine can be arranged.

The tower having a locally reduced cross section at sea level is possible since the connecting elements transmit the bending moment induced by wind forces on the tower to the connecting means on the wind side, from there to the at least one floating body, and from there further to the floatation element bottom. Thereby the bending moment is relieved from the wave impact area of the wind turbine. As given above, a reduced cross section takes up less wave forces and reduces the overall wave impact forces on the entire construction.

The at least one floating body can have a number of different designs or geometries. By way of example, the at least one floating body can be formed as a continuous or dis-continuous ring surrounding the tower and connected thereto. Also, the at least one floating body can be arranged as a plurality of discrete floating bodies, each arranged at the end of a support structure connected to the tower. The latter means a "star fish"-shaped design.

No matter of design, the number of floating bodies, and their distribution around the tower, should be symmetrical, allowing an even force distribution and thereby balancing of the tower, no matter from what direction the force is applied.

The at least one floating body can be connected to the tower by means of a support structure, whereby connection points between the support structure and the at least one floating body and the tower, respectively can be fixed or pivotable in one or several dimensions.

The support structure can connect to the tower by a plurality of connecting supports, said connecting supports connecting to the tower with an angle and at different levels. By the connecting elements connecting to the tower with an angle and at different levels an increased torsional rigidity is achieved, which better adapts to the wave forces.

The floatation element can comprise one or several compartments provided with a material having a density lower than water. The floatation element thereby contributes to the provision of a lifting force and balancing of the tower.

The wind turbine can be anchored to the sea bed via anchoring connecting means.

At least two sets of connecting elements can be arranged to extend upwards from the at least one floating body to the tower and at least two sets of connecting elements can be arranged to extend downwards from the floating body to the lower part of the tower and its floatation element, wherein said sets engage the tower and the floatation element at different heights.

The connecting elements can bear slidably against the at least one floating body or bear against the at least one floating body via pulleys. The connecting elements can alternatively be fixed to the at least one floating body.

The connecting elements can be chosen from the group consisting of wires, chains, ropes, bars, poles and stakes or any combination thereof. In case of a combination, it can be a combination of two or more of the listed types. All the connecting elements supporting the tower may be similar in type, or combination of types, or they may be different such that e.g. some connecting elements are of one type or combination of types and others are of a different type or combination of types. Regardless of whether a connecting element is a combination of different types or not, it may be convenient to allow the connecting element to comprise a plurality of exchangeable segments connected to each other. An advantage of such a connecting element is that segments of the element may be individually replaced, without having to replace other segments of the connecting element. This may facilitate maintenance caused by e.g. corrosion.

The tower can comprise a weight. The weight, e.g in the form of ballast can be adapated to the overall size and weight of the wind turbine.

Other objectives, features and advantages of the present invention will appear from the following detailed disclosure, from the attached claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and non-limiting detailed description of preferred embodiments of the present invention, with reference to the appended drawing, where the same reference numerals will be used for similar elements.
Fig 1 is a schematic side view of a floating off-shore wind turbine of the present invention.
Figs 2a-2d discloses different embodiments of the floating body.
Fig 3 discloses highly schematically a cross section of one embodiment of the floating body and the support structure.

### Detailed description of preferred embodiments

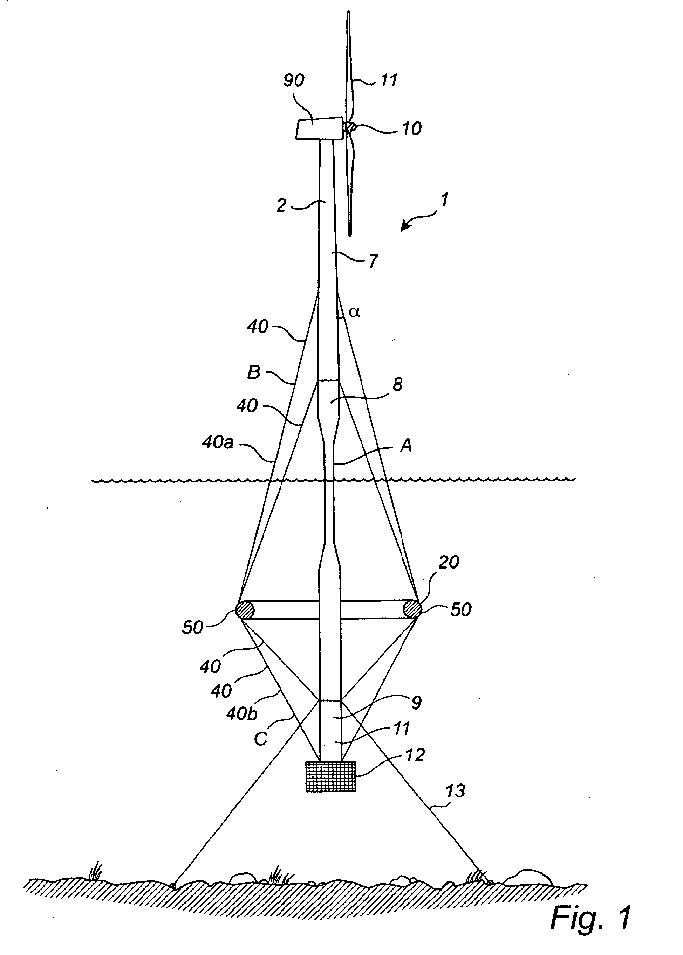

Fig 1 is a schematic side view of a floating off-shore wind turbine 1 of the present invention.

The wind turbine 1 comprises a tower 2 made up of one or several sections 7, 8 and 9 mounted one on top of the other. In the disclosed embodiment the tower is divided into three sections, an upper section 7, a middle section 8 and a lower section 9. The middle section 8 is arranged to cross sea level. It is to be understood that the number of sections should not be a limiting factor and that the tower also can be provided as a single unit.

On top of the upper tower section 7, a nacelle 90 is mounted, the nacelle being horizontally rotatable. To a vertical side of the nacelle 90, a rotor comprising a hub 10 and rotor blades 11 is rotatable mounted.

In order to facilitate access to the tower and the interior thereof, the tower can be provided with a platform, not disclosed. The platform can also be used to carry personnel and wind turbine components during e.g. construction and maintenance of the wind turbine. At the level of said platform a door can be arranged in the tower.

The part of the tower 2 crossing the sea level, in the disclosed embodiment the middle section 8, has a locally reduced cross section A in the portion crossing the sea level. The axial extent of the reduced cross section A corresponds to the expected exposure to impact from wave forces.

The lower end of the tower 2, in the disclosed embodiment the lower section 9, forms a floatation element 11. The floatation element can be formed as one or several internal compartments in the lower end of the tower. It can also be formed as external compartments outside the lower end of the tower 2. The floatation element 11 is axially aligned with the longitudinal extent of the tower 2. The floatation element 11 comprises a material having a density lower than water. The material can be a low density material such as foam, air or gas. Thus, as used herein, the term "material" is used in a broad sense to refer to any type of matter associated with a structure.

The tower 2 has in its lower or lowermost end a weight 12. In the disclosed embodiment the weight is formed as a net structure filled with ballast. The ballast can be any heavy material such as concrete or the like. The tower 2, together with the weight 12 and the floating ring 20 can be seen as a standing pendulum balancing in the vertical direction in the sea.

Anchoring connecting means 13 connect the wind turbine to the seabed. The number of anchoring connecting means, which are preferably wires, chains or the like, can be varied but is preferably at least three. The anchoring connecting means 13 can connect to the tower 2 or to the floatation element 11.

The tower 2 is further provided with at least one floating body 20. The at least one floating body 20 is arranged at a level where it is submerged below sea level. It is preferred that it is submerged to such level that it substantially stays clear of the higher wave forces at the surface. It is to be understood that this depth depends on local conditions such as sea depth, sea currents and bottom topography.

The at least one floating body 20 has a mainly horizontal extension.

The at least one floating body 20 is connected to the tower 2 by connecting support(s), to be described later.

The at least one floating body 20 can have a number of designs, as long as it surrounds the tower 2 in its radial direction, either continuously or discontinuously, Thus, the the at least one floating body 20 can be formed by a single floating body or a plurality of separate or interconnected floating bodies 20.

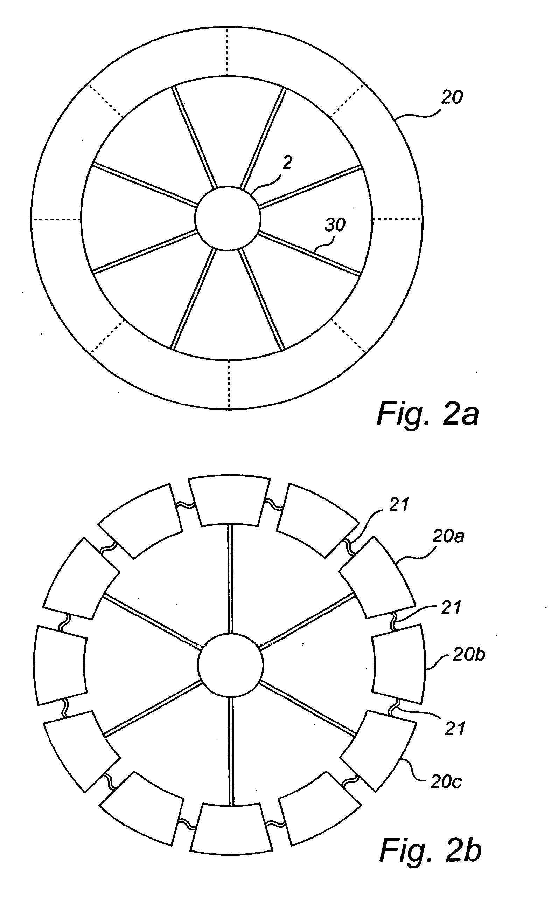

In case of a plurailty of separate or interconnected floating bodies 20, these can be arranged in a symmetrical pattern allowing an even balancing of the tower no matter of wind direction or direction of sea currents. Some examples of such symmetrical patterns are given in Figs 2a-2d.

In Fig 2a, the floating body 20 is formed as a solid ring completely surrounding the tower 2. To allow transport and mounting, the ring can be dividied into segments (disclosed with broken lines) that are interconnected during mounting. In Fig 2a the floating body is connected to the tower via a support structure 30.

In figure 2b, a plurality of floating bodies 20a, 20b, 20c etc are interconnected by connecting supports 21 into a ring surrounding the tower 2. Each floating body is formed as a discrete body.

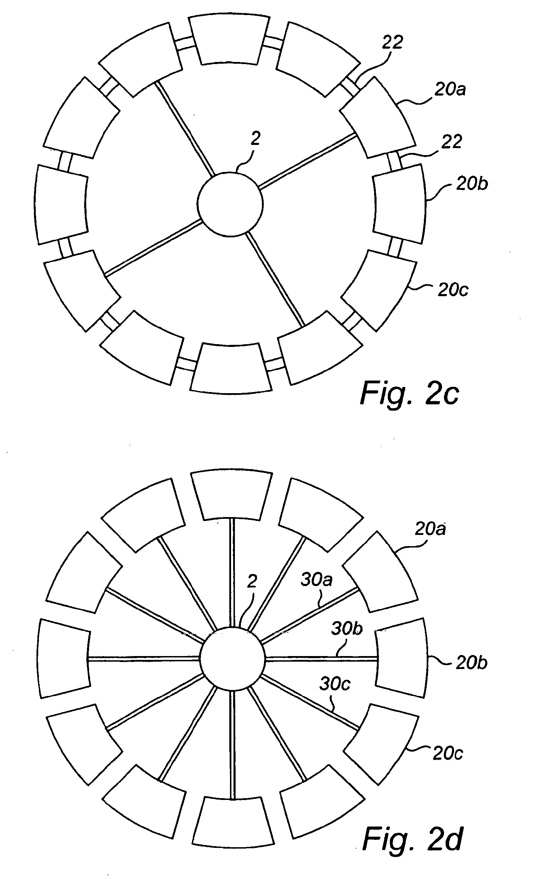

In figure 2c, a plurality of floating bodies 20a, 20b, 20c etc are interconnected into a ring surrounding the tower 2. Unlike the embodiment in Figure 2b, the individual bodies are communicating with each other via fluid lines 22 in order to keep an even internal pressure througout the individial floating bodies.

In figure 2d, the floating body 20 is arranged as a plurality of discrete floating bodies 20a, 20b, 20c etc, each arranged at the end of a rigid or semi-rigid support element 30a, 30b, 30c connected to the tower 2 and radiating from the same. The support elements form a support structure 30. Said support elements are preferably fixed to the tower and to the floating bodies allowing no movement there between.

Generally, no matter of the design of the floating bodies 20, the number of floating bodies are adapted to the total weight of the wind power turbine and also the size of the individual floating bodies.

The floating bodies 20 have a density lower than water. They can be formed by a low density material such as foam or be formed as containers filled with e.g. air or gas.

The at least one floating body 20 is connected to the tower 2 by means of a support structure 30. The support structure 30 can be formed in a number of ways, e.g. as a segmented frame, a one piece frame or a plurality of support elements 30a, 30b, 30c, etc. Also, it can be a plurality of connecting supports 21 from the group consisting of wires, chains, ropes, bars, poles and stakes or any combination thereof. Thus, the connecting supports can be rigid, semi-rigid or flexible. The support structure 30 extends radially between the tower 2 and the at least one floating body 20.

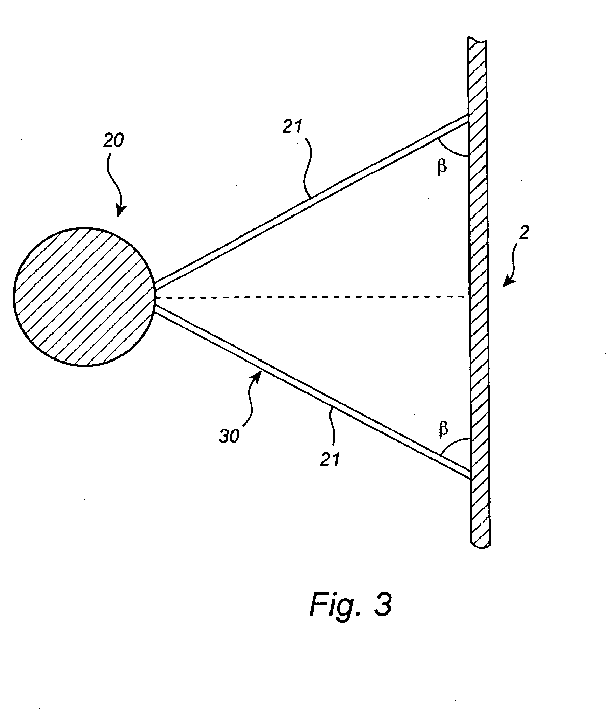

As disclosed highly schematically in Fig. 3, the support structure 30 can be arranged so that the individual connecting supports 21 connect to the tower 2 with an angle β and at different levels, which contributes to torsional rigidity.

In fact, the support structure 30 can have any configuration as long as it withstands the mainly vertical forces applied from the sea to the tower since the tower will have a reciprocating vertical movement in the water. It is preferably rigid or semi-rigid.

The connection points between the support structure 30 and the at least one floating body and the tower, respectively can be fixed or pivotable in one or several dimensions.

Now turning to Fig 1, connecting elements 40 are distributed evenly spaced, connecting the at least one floating body 20 with the tower 2 and with the lower or lowermost part of the floatation element 11, respectively. The connecting elements 40 can be from the group consisting of wires, chains, ropes, bars, poles and stakes or any combination thereof. The plurality of connecting elements 40 are conveniently evenly spaced around the tower 2 via the at least one floating body 20 to evenly distribute forces in all horizontal directions.

In the disclosed embodiment, two sets B of connecting elements 40 are arranged to extend upwards from the at least one floating body to an upper end of the tower, and two sets C of connecting elements 40 are arranged to extend downwards from the floating body 20 to the lower part of the floatation element 11. In case of two or more sets B, C of connecting elements 40 on each side, they preferably engage the tower 2 and the floatation element 20 at different heights. It is to be understood that the number of sets B, C of connecting elements 40 can be varied. Further, the number of connecting elements 40 in each set B, C can be varied depending on types and dimensions. In one embodiment 8-12 wires are used in each set. The number of connecting elements 40 may e.g. depend on the strength of each element, the size of the tower and the angle α which the connecting element forms to the tower.

The connecting elements 40 may be fastened to the at least one floating body 20 at its periphery, but depending on the design of the latter other connecting points are possible. The connecting points must not be fixed connections but also slidable or pivotable connections are possible to lower friction and to better accommodate movements due to the wave forces. Also pulleys (50) can be used.

Although the connecting elements 40 of Fig 1 are elongated elements having a first section 40a extending between the tower 2 and the at least one floating body 20 and a second section 40b extending between the at least one floating body 20 and the floatation element 11, those skilled in the art will appreciate that other arrangements are possible. For example, the connecting elements may alternatively be a plurality of connecting elements extending from the at least one floating body to at least one of the tower and the floatation element.

The connecting elements 40 may comprise rigging screws, or any other means for facilitating tightening and adjusting.

The connecting elements 40 may extend from any part of the tower 2. If the tower 2 is divided into a plurality of sections 7, 8, 9, the connecting elements 40 may extend from any one of the sections or from a plurality of the sections, depending on the design and requirements of the wind turbine. In the specific embodiment of Fig 1, one of the upper sets B extend from the region at the transition between the upper tower section 7 and the middle tower section 8.

By the connecting elements 40, bending moment induced by wind forces on the tower 2 is transmitted to the connecting elements on the wind side, from there to the at least one floating body 20 forming a radial distance element and from the at least one floating body further to the floatation element 11. Thus, the bending moment is relieved from the wave impact area of the wind turbine, allowing the section of the tower crossing sea level to have a reduced cross section and also, allowing the floatation element to have a reduced weight. As a consequence, material can be saved at the section of the turbine near the sea level. This means that because of the smaller cross section per se and since the forces are reduced, the mass of the entire turbine can be significantly reduced.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A floating off-shore wind turbine (1) comprising:
a tower (2),
a floatation element (11) arranged at a lower end of said tower,
at least one floating body (20) connected to the tower and extending radially outward there from, said at least one floating body having a density lower than water and configured to be submerged below sea level, and
a plurality of connecting elements (40) extending from the at least one floating body to an upper end of the tower and from the at least one floating body to the lower end of the tower, respectively,
**characterized in that** the tower (2) has a locally reduced cross section (A) at sea level.

2. The floating off-shore wind turbine according to claim 1, wherein the at least one floating body (20) is formed as a continuous or dis-continuous ring surrounding the tower and connected thereto.

3. The floating off-shore wind turbine according to claim 1, wherein the at least one floating body (20) is arranged as a plurality of discrete floating bodies (20a; 20b; 20c), each arranged at the end of a support structure (30) connected to the tower (2).

4. The floating off-shore wind turbine of any of the preceding claims, wherein said at least one floating body (20) is connected to the tower (2) by means of a support structure (30), whereby connection points between the support structure and the at least one floating body and the tower, respectively are fixed or pivotable in one or several dimensions.

5. The floating off-shore wind turbine according to claim 4, wherein the support structure (30) connects to the tower (2) by a plurality of connecting supports (21), said connecting supports connecting to the tower (2) with an angle (β) and at different levels.

6. The floating off-shore wind turbine of any of the preceding claims, wherein said floatation element (11) comprises one or several compartments provided with a material having a density lower than water.

7. The floating off-shore wind turbine according to claim 1, wherein the wind turbine (1) is anchored to the sea bed via anchoring connecting means (13).

8. The floating off-shore wind turbine according to claim 1, wherein at least two sets (B) of connecting elements (40) are arranged to extend upwards from the at least one floating body (20) to the tower (2) and at least two sets (C) of connecting elements (40) are arranged to extend downwards from the floating body (20) to the lower part of the tower (2) and its floatation element (11), wherein said sets engage the tower and the floatation element at different heights.

9. The floating off-shore wind turbine of any one of the preceding claims, wherein the connecting elements (40) slidably bear against the at least one floating body (20) or bear against the at least one floating body via pulleys (50).

10. The floating off-shore wind turbine of any one of claims 1-7, wherein the connecting elements (40) are fixed to the at least one floating body (20).

11. The floating off-shore wind turbine of any one of the preceding claims, wherein the connecting elements (40) are chosen from the group consisting of wires, chains, ropes, bars, poles and stakes or any combination thereof.

12. The floating off-shore wind turbine of any of the preceding claims, wherein the tower comprises a weight (12).

## Patentansprüche

1. Schwimmende Offshore-Windturbine (1), umfassend:
einen Turm (2),
ein Schwimmelement (11), das an einem unteren Ende des Turms angeordnet ist,
mindestens ein Schwimmkörper (20), der mit dem Turm verbunden ist und sich radial nach außen von dort aus erstreckt, wobei mindestens ein Schwimmkörper eine Dichte unter der von Wasser hat und zum Untertauchen unter den Meeresspiegel konfiguriert ist, und
mehrere Verbindungselemente (40), die sich von dem mindestens einen Schwimmkörper bis zu einem oberen Ende des Turms bzw. von dem mindestens einen Schwimmkörper bis zum unteren Ende des Turms erstrecken,
**dadurch gekennzeichnet, dass** der Turm (2) einen lokal reduzierten Querschnitt (A) auf Meereshöhe hat.

2. Schwimmende Offshore-Windturbine nach Anspruch 1, wobei der mindestens eine Schwimmkörper (20) als durchgehender oder unterbrochener Ring gebildet ist, der den Turm umgibt und mit demselben verbunden ist.

3. Schwimmende Offshore-Windturbine nach Anspruch 1, wobei der mindestens eine Schwimmkörper (20) in Form von mehreren diskreten Schwimmkörpern (20a; 20b; 20c) ausgelegt ist, wobei jeder am Ende der Stützstruktur (30) angeordnet ist, die mit dem Turm (2) verbunden ist.

4. Schwimmende Offshore-Windturbine nach einem der vorherigen Ansprüche, wobei der mindestens eine Schwimmkörper (20) mit dem Turm (2) mittels einer Stützstruktur (30) verbunden ist, wobei Verbindungspunkte zwischen der Stützstruktur und dem mindestens einen Schwimmkörper bzw. dem Turm fest oder drehbar in einer oder mehreren Dimensionen sind.

5. Schwimmende Offshore-Windturbine nach Anspruch 4, wobei die Stützstruktur (30) mit dem Turm (2) durch mehrere Halterungen (21) verbunden ist, wobei die Halterungen mit dem Turm (2) unter einem Winkel (β) und in verschiedenen Höhen verbunden sind.

6. Schwimmende Offshore-Windturbine nach einem der vorherigen Ansprüche, wobei das Schwimmelement (11) eine oder mehrere Fächer umfasst, die mit einem Material versehen, welches eine geringere Dichte als Wasser hat.

7. Schwimmende Offshore-Windturbine nach Anspruch 1, wobei die Windturbine (1) am Meeresboden durch Verankerungsmittel (13) verankert ist.

8. Schwimmende Offshore-Windturbine nach Anspruch 1, wobei mindestens zwei Sätze (B) von Verbindungselementen (40) so ausgelegt sind, dass sich vom mindestens einen Schwimmkörper (20) bis zum Turm (2) nach oben erstrecken und mindestens zwei Sätze (C) von Verbindungselementen (40) so ausgelegt sind, dass sie sich vom Schwimmkörper (20) zum unteren Teil des Turms (2) und seinem Schwimmelement (11) nach unten erstrecken, wobei die Sätze mit dem Turm und dem Schwimmelement in unterschiedlichen Höhen verbunden sind.

9. Schwimmende Offshore-Windturbine nach einem der vorherigen Ansprüche, wobei die Verbindungselemente (40) gleitfähig gegen den mindestens einen Schwimmkörper (20) drücken oder gegen den mindestens einen Schwimmkörper über Rillenscheiben (50) drücken.

10. Schwimmende Offshore-Windturbine nach einem der Ansprüche 1-7, wobei die Verbindungselemente (40) an dem mindestens einen Schwimmkörper (20) befestigt sind.

11. Schwimmende Offshore-Windturbine nach einem der vorherigen Ansprüche, wobei die Verbindungselemente (40) aus der Gruppe bestehend aus Drähten, Ketten, Seilen, Stangen, Masten und Pfosten oder einer Kombination derselben ausgewählt werden.

12. Schwimmende Offshore-Windturbine nach einem der vorherigen Ansprüche, wobei der Turm ein Gewicht (12) umfasst.

## Revendications

1. Turbine éolienne marine flottante (1), comprenant :
une tour (2),
un élément de flottaison (11) agencé à une extrémité inférieure de ladite tour,
au moins un corps flottant (20) raccordé à la tour et s'étendant radialement vers l'extérieur à partir de celle-ci, ledit au moins un corps flottant possédant une densité inférieure à celle de l'eau et étant configuré pour être immergé sous le niveau de la mer, et
une pluralité d'éléments de raccordement (40) s'étendant de l'au moins un corps flottant à une extrémité supérieure de la tour et de l'au moins un corps flottant à l'extrémité inférieure de la tour, respectivement,
**caractérisé en ce que** la tour (2) possède une section transversale réduite localement (A) au niveau de la mer.

2. Turbine éolienne marine flottante selon la revendication 1, dans laquelle l'au moins un corps flottant (20) présente une forme d'anneau continu ou discontinu entourant la tour et raccordé à celle-ci.

3. Turbine éolienne marine flottante selon la revendication 1, dans laquelle l'au moins un corps flottant (20) est agencé sous forme de pluralité de corps flottants distincts (20a ; 20b ; 20c), chacun agencé à l'extrémité d'une structure de support (30) raccordée à la tour (2).

4. Turbine éolienne marine flottante selon une quelconque des revendications précédentes, dans laquelle ledit au moins un corps flottant (20) est raccordé à la tour (2) au moyen d'une structure de support (30), moyennant quoi des points de raccordement entre la structure de support et l'au moins un corps flottant et la tour, respectivement, sont fixes ou pivotants dans une ou plusieurs dimensions.

5. Turbine éolienne marine flottante selon la revendication 4, dans laquelle la structure de support (30) est raccordée à la tour (2) par une pluralité de supports de raccordement (21), lesdits supports de raccordement se raccordant à la tour (2) avec un angle (β) et à des niveaux différents.

6. Turbine éolienne marine flottante selon une quelconque des revendications précédentes, dans laquelle ledit élément de flottaison (11) comprend un ou plusieurs compartiments pourvus d'un matériau possédant une densité inférieure à celle de l'eau.

7. Turbine éolienne marine flottante selon la revendication 1, dans laquelle la turbine éolienne (1) est ancrée au fond marin par l'intermédiaire de moyens de raccordement à ancrage (13).

8. Turbine éolienne marine flottante selon la revendication 1, dans laquelle au moins deux jeux (B) d'éléments de raccordement (40) sont agencés pour s'étendre vers le haut de l'au moins un corps flottant (20) à la tour (2) et au moins deux jeux (C) d'éléments de raccordement (40) sont agencés pour s'étendre vers le bas du corps flottant (20) à la partie inférieure de la tour (2) et son élément de flottaison (11), dans laquelle lesdits jeux entrent en prise avec la tour et l'élément de flottaison à des hauteurs différentes.

9. Turbine éolienne marine flottante selon une quelconque des revendications précédentes, dans laquelle les éléments de raccordement (40), de façon coulissante, prennent appui contre l'au moins un corps flottant (20) ou prennent appui contre l'au moins un corps flottant par l'intermédiaire de poulies (50).

10. Turbine éolienne marine flottante selon une quelconque des revendications 1 à 7, dans laquelle les éléments de raccordement (40) sont fixés à l'au moins un corps flottant (20).

11. Turbine éolienne marine flottante selon une quelconque des revendications précédentes, dans laquelle les éléments de raccordement (40) sont choisis parmi le groupe constitué de fils métalliques, chaînes, câbles, barres, poteaux et pieux ou une quelconque association de ceux-ci.

12. Turbine éolienne marine flottante selon une quelconque des revendications précédentes, dans laquelle la tour comprend un poids (12).
